# EUROPÄISCHE PATENTSCHRIFT

(11) **EP 1 016 199 B1**
(45) Veröffentlichungstag und Bekanntmachung des Hinweises auf die Patenterteilung: **14.11.2001**
(21) Anmeldenummer: 98956772.2
(22) Anmeldetag: 15.09.1998
(51) Int. Cl.: H02K 29/00, H02K 3/52

(54) **STATOR FÜR EINEN ELEKTROMOTOR, INSBESONDERE BÜRSTENLOSEN GLEICHSTROMMOTOR**
STATOR FOR AN ELECTRIC MOTOR, INCLUDING FOR A BRUSHLESS DIRECT CURRENT MOTOR
STATOR POUR MOTEUR ELECTRIQUE, NOTAMMENT POUR MOTEUR A COURANT CONTINU SANS BALAIS

(30) Priorität: 17.09.1997 DE 19740938
(43) Veröffentlichungstag der Anmeldung: 05.07.2000
(73) Patentinhaber: TRW Automotive Electronics & Components GmbH & Co. KG, 78315 Radolfzell (DE)
(72) Erfinder: MÜLLER, Jürgen, D-78315 Radolfzell (DE); PETER, Cornelius, D-77815 Brühl (DE); WILKENDORF, Hardy, D-88696 Owingen (DE)
(74) Vertreter: Eder, Thomas, Dr.-Ing.
(86) Internationale Anmeldenummer: DE9802738
(87) Internationale Veröffentlichungsnummer: WO9914841

(56) Entgegenhaltungen:
- EP-A- 0 064 105
- US-A- 5 175 458
- PATENT ABSTRACTS OF JAPAN vol. 095, no. 007, 31. August 1995 & JP 07 107724 A (MATSUSHITA ELECTRIC IND CO LTD), 21. April 1995
- PATENT ABSTRACTS OF JAPAN vol. 096, no. 009, 30. September 1996 & JP 08 126238 A (MITSUMI ELECTRIC CO LTD), 17. Mai 1996

## Beschreibung

Die Erfindung betrifft einen Stator für einen Elektromotor, insbesondere bürstenlosen Gleichstrommotor, mit den Merkmalen des Oberbegriffs des Patentanspruchs 1 (Siehe EP-A-0 064 105).

Insbesondere in der KFZ-Technik besteht die Anforderung, möglichst einfach ansteuerbare und mit möglichst geringem Aufwand herstellbare und damit kostengünstige motorische Antriebe einzusetzen, beispielsweise für eine elektrisch ansteuerbare Hydraulikpumpe für eine Servolenkung. Für den genannten Anwendungsfall eignen sich infolge des guten Wirkungsgrads und der Wartungsfreundlichkeit vor allem bürstenlose Gleichstrommotoren, insbesondere 4-Phasen-Gleichstrommotoren.

Bekannte Statoren für derartige Motoren weisen in der Regel einen Grundkörper aus einem magnetisierbaren Material auf. Häufig ist der Grundkörper aus lamellierten Blechen hergestellt, die durch Stanzpaketieren miteinander verbunden sind. Die Bleche erstrecken sich in Ebenen senkrecht zur Längsachse des Stators.

Der so hergestellte Grundkörper weist bereits Statorzähne auf, auf welche die erforderliche Anzahl von Wicklungen aufgebracht werden. Vor dem Bewickeln der Statorzähne ist es jedoch erforderlich, Maßnahmen zu ergreifen, die verhindern, dass beim Bewickeln des Stators oder anderweitig die Isolierung der Leiter beschädigt wird, durch welche die Wicklungen gebildet werden. Diese Gefahr ist insbesondere durch die scharfen Kanten der Statorbleche gegeben.

Bei bekannten Statoren werden daher zumindest die Innenbereiche der Statorzähne, welche mit den Leitern der Wicklungen in Berührung kommen, mit einer Pulverbeschichtung versehen. Diese Schicht deckt einerseits die scharfen Kanten des Grundkörpers bzw. der Statorbleche ab und verhindert andererseits selbst bei einer Beschädigung der Isolierung einer oder mehrerer Windungen einen elektrischen Kontakt mit dem Grundkörper. Nachteilig an einer derartigen Pulverbeschichtung des Grundkörpers ist jedoch das relativ zeit- und kostenaufwendige Verfahren.

Des weiteren werden die Statorwicklungen bekannter Motoren in der Regel mit Anschlusskontakten verbunden, welche im Gehäuse des Motors vorgesehen sind. Des weiteren kann im Gehäuse auch eine Steuerschaltung vorgesehen sein, wobei in diesem Fall die Statorwicklungen in der Regel mit auf der Steuerschaltung vorgesehenen Anschlusskontakten verbunden werden, beispielsweise durch Löten, Klemmen oder dergleichen. Dies erfordert jedoch wiederum separate Arbeitsschritte, wodurch die Herstellung eines derartigen Motors verteuert wird.

Der Erfindung liegt daher ausgehend von diesem Stand der Technik die Aufgabe zugrunde, einen Stator für einen Elektromotor, insbesondere bürstenlosen Gleichstrommotor, zu schaffen, welcher einfacher und kostengünstiger herstellbar ist und insbesondere eine einfache Kontaktierung der Statorwicklungen ermöglicht.

Die Erfindung löst diese Aufgabe mit den Merkmalen des Patentanspruchs 1.

Die Erfindung geht von der Erkenntnis aus, dass eine bisher vorgenommene Pulverbeschichtung der Statorzähne durch das Umspritzen der Statorzähne mit Kunststoff ersetzt werden kann, wobei gleichzeitig, d.h. in einem Herstellungsschritt, ein Trägerteil für Anschlusskontakte zur Kontaktierung der Statorwicklungen hergestellt werden kann. Hierdurch ergibt sich ein wesentlicher Rationalisierungsvorteil bei der Herstellung des Stators bzw. eines entsprechenden Motors.

In der bevorzugten Ausführungsform der Erfindung ist das Trägerteil oder Trägerelement als an einer Stirnseite des Statorkörpers vorgesehener, zur Längsachse des Stators konzentrischer Ring ausgebildet. Der Ring kann mit Ausnehmungen für die Anschlusskontakte gespritzt werden, in welche dann die Anschlusskontakte auf einfache Weise mit ihren Füßen eingesetzt, z.B. eingepresst, werden.

Vorzugsweise weist der Ring eine radial außen liegende Schulter auf, welche beispielsweise senkrecht zur Längsachse des Stators verläuft. In dieser Schulter sind die sich im Wesentlichen axial erstreckenden Anschlusskontakte vorgesehen.

Durch die Anordnung der Anschlusskontakte unmittelbar am Stator selbst ergibt sich der Vorteil, dass bereits für den Wickelvorgang die Anschlusskontakte zur mechanischen Fixierung der Leiterenden dienen können. Ein Lösen der letzten Windungen der Wicklungen in der Zeitspanne zwischen dem Wickeln und dem Kontaktieren der Leiterenden wird somit vermieden, was bei bekannten Statoren bzw. Motoren insbesondere dann auftrat, wenn die Wicklungsenden unmittelbar mit Anschlusskontakten auf einer Steuerschaltung verbunden wurden.

Bei der bevorzugten Ausführungsform der Erfindung weist der Ring eine sich von der Schulter in einem radial inneren Bereich axial nach außen erstreckende Wandung auf, welche zur Halterung und Fixierung einer mit dem Stator verbundenen Steuerschaltung dient. Hierzu ist in der Steuerschaltung eine entsprechende Ausnehmung oder Durchbruch vorgesehen, in welche die Wandung eingreift.

Gleichzeitig greifen die Anschlusskontakte vorzugsweise zumindest mit ihren axial äußeren Bereichen in entsprechende Kontaktierungsausnehmungen oder -durchbrüche in einem Stanzgitter oder einer gedruckten Leiterplatte der Steuerschaltung ein und werden mit den entsprechenden Leitern der Steuerschaltung elektrisch und mechanisch verbunden, beispielsweise durch Löten, Klemmen, Schweißen oder dergleichen. Hierdurch ergibt sich der Vorteil einer äußerst einfachen Kontaktierbarkeit der Wicklungen sowie der Vorteil, dass die Anschlusskontakte gleichzeitig als Elemente zur elektrischen Kontaktierung und mechanischen Halterung der Steuerschaltung dienen.

Bei der bevorzugten Ausführungsform stützt sich die Steuerschaltung mit ihrer Unterseite, vorzugsweise der Unterseite des Stanzgitters oder der gedruckten Leiterplatte, auf der Schulter des Rings ab. Hierdurch wird eine zusätzliche Stabilisierung der Halterung der Steuerschaltung erreicht.

Weitere Ausfuhrungsformen der Erfindung ergeben sich aus den Unteransprüchen.

Es sei bemerkt, dass die Kontaktierung der Wicklungsenden durch am Statorkörper vorgesehene Anschlusskontakte in Verbindung mit allen vor- und nachstehend beschriebenen Merkmalen selbstverständlich auch unabhängig von einem Umspritzen der Statorzähne mit einer Kunststoffschicht einsetzbar ist.

Die Erfindung wird nachfolgend anhand eines in der Zeichnung dargestellten Ausführungsbeispiels näher erläutert. In der Zeichnung zeigen:
- Fig. 1: eine schematische Darstellung eines 4-Phasen-Gleichstrommotors mit zugehöriger Ansteuerschaltung;
- Fig. 2: eine perspektivische Darstellung eines Stators nach der Erfindung;
- Fig. 3: eine schematische Darstellung von Auschnitten einer abgewickelten Seitenansicht des Stators in Fig. 1 zur Erläuterung des Wickelverfahrens nach der Erfindung und
- Fig. 4: eine perspektivische Darstellung des Stators in Fig. 1 mit montierter Steuerschaltung.

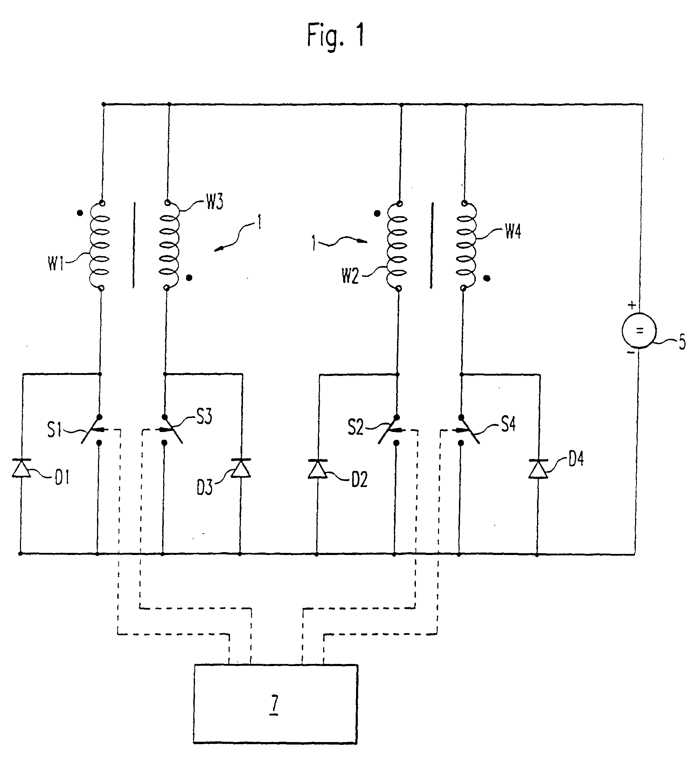

Fig. 1 zeigt eine schematische Darstellung eines 4-Phasen-Gleichstrotnmotors mit einem Stator 1, auf dem Statorwicklungen W1, W2, W3 und W4 vorgesehen sind. Die Wicklungen W1 bis W4 sind auf Zähnen oder Polen 3 des Stators 1 gewickelt. Die angedeutete magnetische Kopplung der entgegengesetzten Phasen I und III bzw. der entsprechenden Wicklungen W1 und W3 sowie der Phasen II und IV bzw. der entsprechenden Wicklungen W2 und W4 wird dadurch erreicht, dass die Wicklungen W1 und W3 bzw. die Wicklungen W2 und W4 auf die selben Statorzähne gewickelt sind.

Die Wicklung bzw. Kontaktierung der Wicklungen W1 und W3 bzw. W2 und W4 erfolgt derart, dass in den Zähnen oder Polen eines nicht dargestellten Rotors zugewandten Bereichen vor den Statorpolen 3 jeweils entgegengesetzte Magnetfelder erzeugt werden. Dies ist in Fig. 1 durch die Punkte an den Wicklungen W1 bis W4 angedeutet.

Jede Wicklung ist mit einem Ende bzw. einem Anschluss mit einer Gleichstromquelle 5 verbunden. Das jeweils andere Ende bzw. der jeweils andere Anschluss jeder Wicklung ist mit einem steuerbaren elektronischen Schalter S1, S2, S3, S4 verbunden, der beispielsweise als Leistungshalbleiter (z.B. Leistungs-FET) ausgebildet sein kann. Jeder der Schalter S1 bis S4 ist mit seinem Steuereingang mit einer Motorsteuereinheit 7 verbunden, welche in an sich bekannter Weise die Wicklungen W1 bis W4 für gewünschte Zeitabschnitte mit der Gleichstromquelle durch eine entsprechende Ansteuerung der Schalter S1 bis S4 verbindet.

Parallel zu jedem steuerbaren Schalter S1 bis S4 ist eine Diode D1 bis D4 geschaltet, wobei die Durchlassrichtung der Dioden so gewählt ist, dass bei einem Schließen des betreffenden Schalters die zugehörige Diode sperrt.

Durch die Kopplung der jeweils entgegengesetzten Phasen I und III bzw. II und IV und die Dioden D3 und D1 bzw. D4 und D2 wird ein Abführen der gespeicherten magnetischen Energie beim Abschalten der betreffenden Phase erreicht, wodurch eine Verbesserung des Wirkungsgrades des Motors gewährleistet ist.

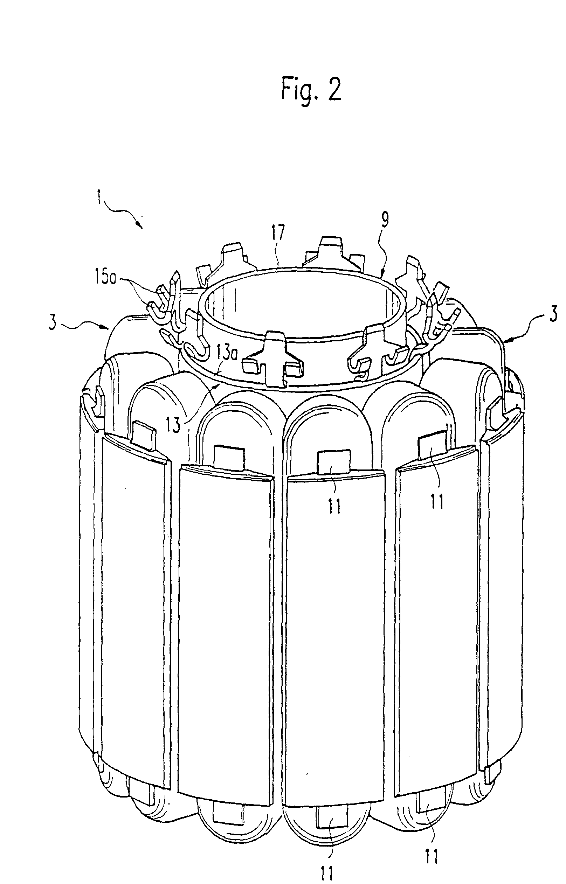

Fig. 2 zeigt den konstruktiven Aufbau eines entsprechenden Stators 1 in perspektivischer Ansicht. Der gezeigte Stator weist zwölf Statorpole 3 auf. Der Statorkörper 9 umfasst in üblicher Weise einen Grundkörper aus paketierten Statorblechen, welche sich senkrecht zur Längsachse des Stators erstrecken. Das Paket der Statorbleche kann zunächst in üblicher Weise durch Stanzpaketieren hergestellt werden, wobei jeweils zwei oder mehrere Bleche durch Ausüben eines punktförmigen Drucks verbunden werden.

Anschließend wird das Paket von Statorblechen mit einem Kunststoffkörper umspritzt, wobei zumindest im Innenbereich der Statorzähne, welche mit den Leitern der Wicklungen W1 bis W4 in Berührung kommen, eine Kunststoffauflage erzeugt wird. Hierdurch ist es nicht mehr nötig, wie bisher eine Pulverbeschichtung dieser Bereiche der Statorzähne vorzunehmen, um eine Beschädigung der Isolationsschicht der Wicklungsdrähte, insbesondere während des Wickelvorgangs, zu vermeiden.

Gleichzeitig werden an die Stirnseiten der Statorzähne 3 Wickelhilfen 11 angespritzt, welche während des Wickelns der Wicklungen W1 bis W4 eine Führung der Drähte bewirken und gleichzeitig die über die Stirnseiten der Statorzähne 3 hinausragenden Teile der Wicklungen in ihrer Lage fixieren.

An seiner Oberseite weist der Statorkörper 9 einen angespritzten Ring 13 mit einer Schulter 13a auf. In diese stirnseitige Schulter 13a sind Anschlusskontakte 15 eingepresst. Hierzu wird der Ring 13 mit entsprechenden Ausnehmungen für die Anschlusskontakte gespritzt, in welche dann die beispielsweise durch Stanzen und Biegen aus Blech hergestellten Anschlusskontakte 15 mit ihren Füßen eingepresst werden.

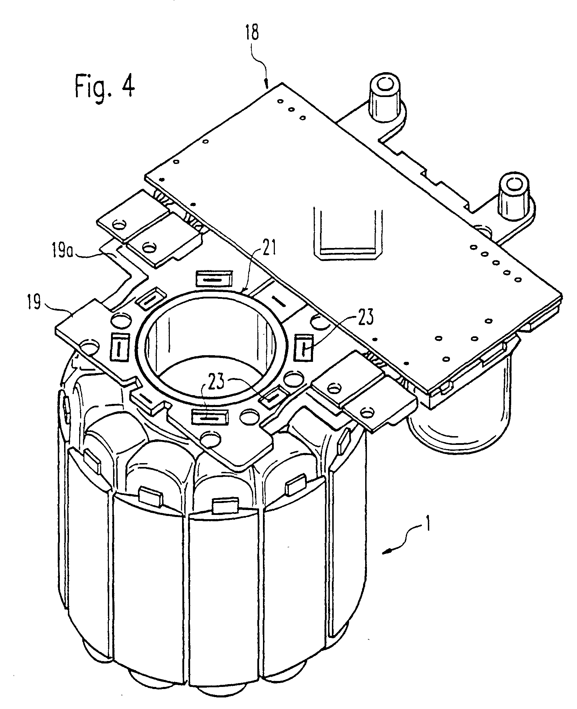

Die sich oberhalb der Schulter 13a des Rings 13 nach oben erstreckende Wandung 17 des Rings 13 dient zur Fixierung und Halterung einer Steuerschaltung 18, wie aus Fig. 4 erkennbar. Die Steuerschaltung 18 kann hierzu ein kunststoffumspritztes Stanzgitter 19 mit einer entsprechenden Ausnehmung 21 aufweisen, in welche die Wandung 17 des Rings 13 eingreift. Die Unterseite des Stanzgitters 19 kann dabei auf der Schulter 13a des Rings 13 aufliegen.

Die Anschlusskontakte 15 greifen mit ihren oberen Bereichen in Kontaktierungsdurchbrüche 23 in den Leiterzügen 19a des Stanzgitters 19 ein und können durch Verlöten oder dergl. mit diesen verbunden werden.

Durch das Umspritzen des Pakets von Statorblechen in einem einzigen Arbeitsschritt mit Kunststoff, wobei die Innenbereiche der Statorzähne 3 umspritzt werden und gleichzeitig der Ring 13 und die Wickelhilfen 11 angespritzt werden, ergibt sich eine äußerst kostengünstige Herstellung des Stators 1. Das Anordnen der Anschlusskontakte 15 unmittelbar am Stator 1 ermöglicht eine einfache Kontaktierung der Enden der die Wicklungen bildenden Leiter mit der Steuerschaltung 18.

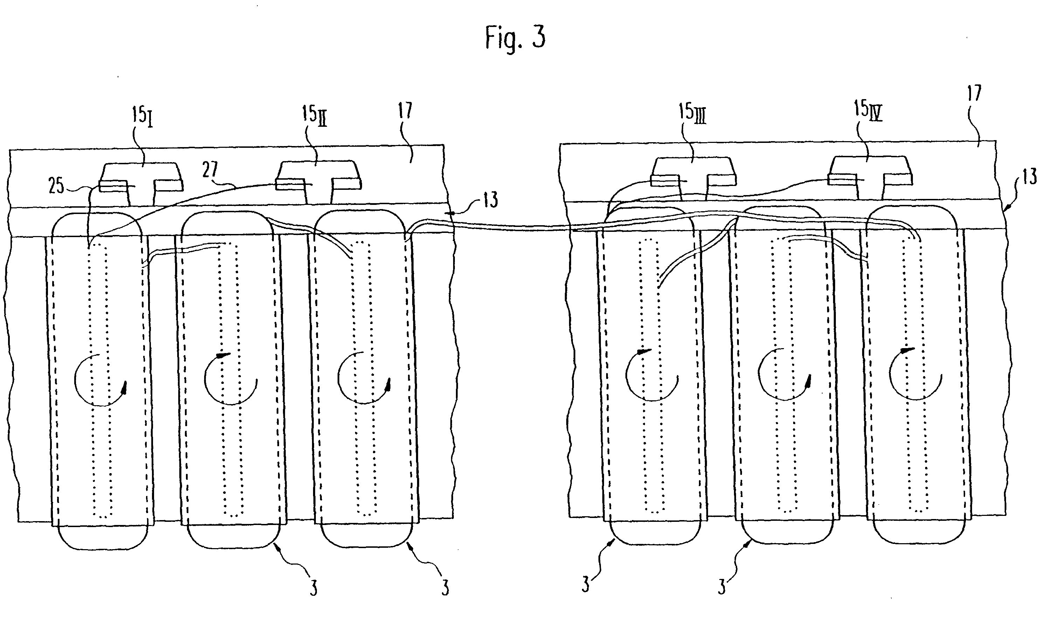

Im Folgenden wird anhand von Fig. 3 das Verfahren zum Bewickeln des Stators 1 erläutert:

Zunächst sei bemerkt, dass sich im dargestellten Ausführungsbeispiel jede der Wicklungen W1 bis W4 über insgesamt sechs Statorzähne 3 erstreckt, welche in an sich bekannter Weise in zwei einander radial gegenüberliegende Gruppen von jeweils drei benachbarten Statorzähnen aufgeteilt sind. Wie bereits erläutert, tragen diese sechs Statorzähne jeweils zwei gekoppelte Wicklungen, also die Wicklungen W1 und W3 oder W2 und W4. Zwei dieser Gruppen sind in Fig. 3 dargestellt, wobei im Folgenden der Einfachheit halber diese Wicklungen als W1 und W3 bezeichnet werden. Die verbleibenden sechs Statorzähne 3 für die Wicklungen W2 und W4 sind analog gewickelt. Diesbezüglich ist das im Folgenden beschriebene Verfahren entsprechend anzuwenden.

Jede der Wicklungen W1 and W3 besteht wegen der erforderlichen hohen Stromstärken aus mehreren parallel geschalteten Teilwicklungen einzelner Drähte. Erfindungsgemäß werden jeweils 2 oder 2n Drähte (d.h. eine gerade Anzahl von Drähten), im dargestellten Ausführungsbeispiel die beiden Drähte 25, 27, gleichzeitig auf die betreffenden Statorzähne 3 gewickelt.

Hierzu werden zunächst die Anfangsenden der 2 Drähte 25, 27 jeweils mit einem ersten 15_{I} und einem zweiten 15_{II} der Anschlusskontakte 15 verbunden. Hierzu weisen die Anschlusskontakte V-förmige Klemmnuten 15a auf, in welche die Drahtenden (abisoliert) eingelegt und durch Zusammenbiegen der Wandungen der Klemmnuten 15a bzw. durch das Biegen einer Schlaufe provisorisch fixiert. Das Kontaktieren kann z.B. mit einer separaten Schweißvorrichtung erfolgen, wobei die Isolierung der Drähte vorzugsweise gleichzeitig mit dem Kontaktierungsvorgang durchbrochen bzw. entfernt wird.

Nach dem Fixieren der Drahtenden wird der erste Statorzahn 3 der ersten Dreiergruppe bewickelt. Dies geschieht bei dem in Fig. 3 dargestellten Ausführungsbeispiel entgegen dem Uhrzeigersinn. Nach dem Aufbringen der gewünschten Anzahl von Windungen wird auf den benachbarten Statorzahn übergegangen und dieser im entgegengesetzten Sinn mit der gewünschten Anzahl von Windungen bewickelt (der mittlere Statorzahn 3 der linken Gruppe in Fig. 3). Schließlich wird auf den letzten Statorzahn der ersten Dreiergruppe übergegangen und dieser mit der gewünschten Anzahl von Windungen versehen. Dies erfolgt wieder im Wicklungssinn des ersten Statorzahns.

Anschließend wird auf den ersten Statorzahn der diametral gegenüberliegenden Dreiergruppe übergegangen (in Fig. 3 der rechte Statorzahn der rechten Dreiergruppe) und dieser bewickelt. Das Bewickeln dieser zweiten Dreiergruppe von Statorzähnen erfolgt analog.

Nach dem Bewickeln des letzten Statorzahns der zweiten Dreiergruppe (der linke Statorzahn der rechten Dreiergruppe in Fig. 3) wird das Ende des Drahts 25 mit dem dritten Anschlusskontakt 15_{III} und das Ende des Drahts 27 mit dem vierten Anschlusskontakt 15_{IV} verbunden. Die Zuordnung der Drahtenden zu den Anschlusskontakten 15 ist bei diesem ersten Teilwickelvorgang zunächst unerheblich. Selbstverständlich muss jedoch festgehalten werden, welche der Anschlusskontakte 15 mit diesen Wicklungen W1 und W3 korrespondieren. Mit anderen Worten, es muss für die spätere Ansteuerung der Wicklungen bekannt sein, welche der beiden Wicklungen mit welchen beiden Anschlusskontakten korrespondieren. Die Wicklungen W1 und W3 untereinander sind gleichwertig, da sie den selben Wicklungssinn aufweisen.

Nach Beendigung dieses ersten Teilwickelvorgangs erfolgt in gleicher Weise ein zweiter Teilwickelvorgang. Der einzige Unterschied besteht darin, dass die Drahtenden mit weiteren Befestigungsmitteln bzw. Klemmnuten 15a der ersten bis vierten Anschlusskontakte verbunden werden. Dies ermöglicht eine einfache Befestigung der Drahtenden, ohne dass die Enden der zuvor gewickelten Drähte gelöst werden müssten.

Bei diesem zweiten und ggf. folgenden Teilwickelvorgängen muss jedoch darauf geachtet werden, dass die beim ersten Teilwickelvorgang gewählte Zuordnung der Anschlusskontakte 15_{I} und 15_{III} zu einer Wicklung, beispielsweise der Wicklung W1, bzw. der Anschlusskontakte 15_{II} und 15_{IV} zur anderen Wicklung, beispielsweise der Wicklung W3, eingehalten wird.

Üblicherweise wird man jedoch ohnehin von vornherein festlegen, dass ganz bestimmte Anschlusskontakte mit ganz bestimmten Wicklungen ggf. Wicklungsenden korrespondieren.

Durch das Zuordnen der Drahtenden zu bestimmten Anschlusskontakten bereits vor dem Wickeln und das Aufrechterhalten der Zuordnung während des Teilwickelvorgangs ist es auf einfache Weise möglich, ohne zusätzliche Maßnahmen, wie das Markieren der Drähte oder das Durchführen von Durchgangsmessungen, nach dem Teilwickelvorgang die Drahtenden korrekt mit den richtigen Anschlusskontakten zu verbinden. Dies gilt insbesondere bei einer geringen Anzahl von gleichzeitig gewickelten Drähten (vorzugsweise zwei Drähte).

Des Weiteren ergibt sich durch das Fixieren der Leiterenden unmittelbar vor bzw. nach dem Wickelvorgang der Vorteil, dass ein Lösen insbesondere der letzten Windungen vermieden wird. Auch wird die Handhabbarkeit der bewickelten Statoren während der Montage des Motors verbessert, da keine Enden der die Wicklungen bildenden Leiter die Montage beeinträchtigen können.

Insgesamt werden so viele Teilwickelvorgänge durchgeführt, bis die erforderliche Anzahl von parallelen Drähten pro Wicklung W1, W3 aufgebracht ist. Die Anzahl der Befestigungsmittel bzw. Klemmnuten 15a an den Anschlusskontakten entspricht dabei vorzugsweise der Anzahl der erforderlichen Teilwickelvorgänge.

Die beiden anderen gekoppelten Wicklungen W2 und W4 werden in analoger Weise hergestellt, wobei darauf zu achten ist, dass der Wicklungssinn auch in Bezug auf die bereits erstellten Wicklungen W1 und W3 korrekt zu wählen ist.

Das dargestellte Verfahren lässt sich selbstverständlich nicht nur für 4-Phasen-Gleichstrommotoren anwenden, sondern auch für Motoren mit einer beliebigen (geraden) Anzahl von Phasen, wobei jeweils die Wicklungen zweier Phasen magnetisch gekoppelt sind.

## Patentansprüche

1. Stator für einen Elektromotor, insbesondere bürstenlosen Gleichstrommotor,
a) welcher einen Statorkörper (9) mit einer vorbestimmten Anzahl von Statorzähnen (3) zur Aufnahme von Statorwicklungen (W1, W2, W3, W4) aufweist,
b) wobei der Statorkörper (9) einen Grundkörper aus magnetisierbarem Material umfasst,
c) welcher zumindest in den Bereichen der Statorzähne (3), in welchen die Statorwicklungen (W1,W2,W3,W4) aufnehmbar oder aufgenommen sind, eine Isolierschicht aufweist,
**dadurch gekennzeichnet,**
d) dass die Isolierschicht eine den Grundkörper umspritzte Kunststoffschicht ist und
e) dass einstückig mit der Isolierschicht ein Trägerelement des Statorkörpers (9) für Anschlusskontakte (15) gespritzt ist, wobei die Enden der Wicklungen mit den zugehörigen Anschlusskontakten (15) verbindbar oder verbunden sind,
f) dass das Trägerelement als an einer Stirnseite des Statorkörpers (9) vorgesehener, zur Längsachse des Stators (1) konzentrischer Ring (13) ausgebildet ist
g) dass im Ring (13) Ausnehmungen für die Anschlusskontakte (15) vorgesehen sind, in welchen die Anschlusskontakte (15) aufgenommen, vorzugsweise eingepresst, sind,
h) dass die Anschlusskontakte (15) gleichzeitig zur elektrischen Kontaktierung und mechanischen Halterung einer vorzugsweise ein Stanzgitter (19) oder eine gedruckte Leiterplatte aufweisenden Steuerschaltung (18) ausgebildet sind.

2. Stator nach Anspruch 1, **dadurch gekennzeichnet, dass** der Ring (13) eine radial außen liegende, sich vorzugsweise senkrecht zur Längsachse des Stators (1) erstreckende Schulter (13a) aufweist, in welcher die Anschlusskontakte (15) vorgesehen sind.

3. Stator nach Anspruch 2, **dadurch gekennzeichnet, dass** der Ring (13) eine sich von der Schulter in einem radial inneren Bereich in Richtung der Längsachse des Stators (1) nach außen erstreckende Wandung (17) aufweist, welche zur Halterung und Fixierung einer mit dem Stator verbindbaren oder verbundenen Steuerschaltung (18) dient.

4. Stator nach einem der Ansprüche 4 bis 6, **dadurch gekennzeichnet, dass** sich die Steuerschaltung (18) mit ihrer Unterseite, vorzugsweise der Unterseite des Stanzgitters (19) oder der gedruckten Leiterplatte, auf der Schulter (13a) des Rings (13) abstützt.

5. Stator nach einem der vorhergehenden Ansprüche, **dadurch gekennzeichnet, dass** einstückig mit der umspritzten Schicht Wickelhilfen gespritzt sind, welche an Stirnseiten der Statorzähne (3) in deren radial äußeren Bereichen vorgesehen sind und sich im Wesentlichen in axialer Richtung erstrecken.

6. Elektromotor, insbesondere bürstenloser Gleichstrommotor, mit einem Rotor, einem Stator (1) nach einem der Ansprüche 1 bis 5 und einer mit dem Stator (1) verbundenen Steuerschaltung (18).

## Claims

1. Stator for an electric motor, in particular a brushless DC motor,
a) which has a stator body (9) with a predetermined number of stator teeth (3) for holding stator windings (W1, W2, W3, W4),
b) with the stator body (9) having a base body composed of magnetic material,
c) which has an insulating layer at least in the areas of the stator teeth (3) in which the stator windings (W1, W2, W3, W4) can be or are held,
**characterized**
d) in that the insulating layer is a plastic layer extrusion-coated on the base body, and
e) in that a mounting element of the stator body (9) is injection-moulded integrally with the insulating layer for connecting contacts (15), and in which case the ends of the windings can be or are connected to the associated connecting contacts (15),
f) in that the mounting element is in the form of a ring (13) which is provided on one end face of the stator body (9) and is concentric with respect to the longitudinal axis of the stator (1),
g) in that recesses for the connecting contacts (15) are provided in the ring (13), in which recesses the connecting contacts (15) are held, preferably by being pressed in, and
h) in that the connecting contacts (15) are at the same time designed to make electrical contact with and to provide a mechanical mounting for a control circuit (18) which preferably has a stamped grid (19) or a printed circuit board.

2. Stator according to Claim 1, **characterized in that** the ring (13) has a shoulder (13a) which is located radially on the outside and preferably extends at right angles to the longitudinal axis of the stator (1) and in which the connecting contacts (15) are provided.

3. Stator according to Claim 2, **characterized in that** the ring (13) has a wall (17) which extends outwards from the shoulder in a radially inner region in the direction of the longitudinal axis of the stator (1) and is used for mounting and fixing a control circuit (18) which can be or is connected to the stator.

4. Stator according to one of Claims 4 to 6,
**characterized in that** the control circuit (18) is supported by its lower face, preferably by the lower face of the stamped grid (19) or of the printed circuit board, on the shoulder (13a) of the ring (13).

5. Stator according to one of the preceding claims, **characterized in that** winding aids are injection-moulded integrally with the extrusion-coated layer, are provided on the radially outer regions of the end faces of the stator teeth (3), and extend essentially in the axial direction.

6. Electric motor, in particular a brushless DC motor, having a rotor, a stator (1) according to one of Claims 1 to 5, and having a control circuit (18) connected to the stator (1).

## Revendications

1. Stator pour un moteur électrique, notamment un moteur à courant continu sans balais,
a) comportant un corps statorique (9) muni d'un nombre prédéterminé de dents statoriques (3) en vue de recevoir des enroulements statoriques (W1, W2, W3, W4),
b) le corps statorique (9) comprenant un corps de base en un matériau magnétisable
c) qui présente une couche isolante au moins dans les régions des dents statoriques (3) dans lesquelles les enroulements statoriques (W1, W2, W3, W4) sont ou peuvent être logés,
**caractérisé par** le fait
d) que la couche isolante est une couche en matière plastique moulée périphériquement par injection sur le corps de base ;
e) qu'un élément de support du corps statorique (9), destiné à des contacts de raccordement (15), est venu de moulage par injection d'un seul tenant avec la couche isolante, les extrémités des enroulements étant ou pouvant être reliées aux contacts de raccordement (15) associés ;
f) que l'élément de support est réalisé sous la forme d'une bague (13), prévue à une face extrême du corps statorique (9) et concentrique à l'axe longitudinal du stator (1) ;
g) que des évidements affectés aux contacts de raccordement (15) et dans lesquels lesdits contacts de raccordement (15) sont logés, de préférence emboîtés par pression, sont prévus dans la bague (13) ;
h) que les contacts de raccordement (15) sont simultanément réalisés en vue de la mise en contact électrique et de la retenue mécanique d'un circuit de commande (18) présentant, de préférence, une grille matricée (19) ou une plaquette à circuits imprimés.

2. Stator selon la revendication 1, **caractérisé par le fait que** la bague (13) comporte un épaulement (13a) occupant une position radialement extérieure, s'étendant de préférence perpendiculairement à l'axe longitudinal du stator (1), et dans lequel les contacts de raccordement (15) sont prévus.

3. Stator selon la revendication 2, **caractérisé par le fait que** la bague (13) comporte un cloisonnement (17) qui s'étend vers l'extérieur à partir de l'épaulement, dans une région radialement intérieure dans la direction de l'axe longitudinal du stator (1), et qui sert à la retenue et à la consignation à demeure d'un circuit de commande (18) raccordé ou pouvant être raccordé audit stator.

4. Stator selon l'une des revendications 1 à 3, **caractérisé par le fait que** le circuit de commande (18) prend appui sur l'épaulement (13a) de la bague (13) par sa face inférieure, de préférence la face inférieure de la grille matricée (19) ou de la plaquette à circuits imprimés.

5. Stator selon l'une des revendications précédentes,
**caractérisé par le fait que** des auxiliaires de bobinage, injectés d'une seule pièce avec la couche moulée périphériquement par injection, sont prévus sur des faces extrêmes des dents statoriques (3), dans les régions radialement extérieures de celles-ci, et s'étendent pour l'essentiel dans le sens axial.

6. Moteur électrique, notamment moteur à courant continu sans balais, comprenant un rotor, un stator (1) selon l'une des revendications 1 à 5, et un circuit de commande (18) raccordé audit stator (1).
